# EUROPEAN PATENT SPECIFICATION

(11) **EP 2 796 034 B1**
(45) Date of publication and mention of the grant of the patent: **14.10.2015**
(21) Application number: 14176136.1
(22) Date of filing: 17.05.2010
(51) Int. Cl.: A01G 1/00, E01C 13/08, E01H 1/04

(54) **Infill removal device for removing infill from a strip of artificial turf**
Vorrichtung zur Beseitigung von Füllmaterial aus einem Streifen Kunstrasen
Dispositif d'élimination d'intercalaire pour éliminer l'intercalaire d'une bande de gazon artificiel

(43) Date of publication of application: 29.10.2014
(62) Divisional of application: 10163012.7
(73) Proprietor: Schuurman Holding B.V., 1394 AC Nederhorst den Berg (NL)
(72) Inventor: Schuurman, Thomas, 1394 AC Nederhorst Den Berg (NL)
(74) Representative: EP&C

(56) References cited:
- EP-A1- 2 135 497
- EP-A2- 0 185 646
- DE-A1- 4 136 517
- JP-A- 2000 008 314

## Description

### Field of the art

The present invention relates to processing artificial turf and in particular to a device and method for removing infill material from a strip of artificial grass.

### Description of the prior art

On modern sports fields, artificial turf is used more and more. The quality of the artificial turf has improved gradually and substantially over the years, and artificial turf is now a preferred choice for many sports clubs. In particular, artificial grass (or synthetic grass) is used widely on football fields, hockey fields, baseball fields and many other fields.

It is also known that artificial turf suffers from wear and tear. After a period of time, the artificial turf is worn out and needs to be replaced by new artificial turf. The removing of the old artificial turf is a costly operation. A substantial number of artificial turf fields have been installed over the past years, and a substantial number of these fields now need replacement. Therefore, devices have been developed to assist in the operation.

EP2135497 discloses an apparatus for handling artificial turf. The apparatus includes a removing station 110 for lifting a strip of artificial turf, a separation station 122 for separating filling material from the artificial turf and a winding station for winding the strip onto a shaft. EP2135497 discloses a solution which generates the artificial turf on the one hand and the infill material (also referred to as filler material) on the other hand. However, it was found that the resulting quantity of infill material needs further processing. Thus, the infill material generally needs to be transported from the site of the field to a separate processing facility for further processing. This is expensive and cumbersome.

Furthermore, the apparatus of EP2135497 does not remove all the infill material.

Other systems also exist. US4084763 discloses a machine for laying down artificial turf or picking up artificial turf. The artificial turf and the infill material are simply rolled up together. Disadvantageously, a further processing step is then required to separate the artificial turf from the infill material. Next, the infill material itself needs to be processed in another processing step. US4084763 thus discloses a partial solution.

EP0185646 discloses a different approach which uses a stationary device for cleaning a strip of artificial turf. A disadvantage of this system is that a transport of the removed artificial turf from the field to the device is required prior to the processing thereof. After the method of EP0185646, the infill material itself needs to be further processed in a next step, which is another disadvantage.

EP0185646 discloses in figure 2 that a strip of artificial turf is rolled onto a take-up roll 26. A rotating drum 46 with beater bars 47 is positioned below the roll 26 to dislodge dirt from the artificial turf which is rolled onto the roll 26. The apparatus of EP0185646 does not remove all the infill material.

WO2009/132851 and NL1032985 disclose systems for removing a portion of filler material from artificial turf. The artificial turf itself remains on the ground. A first disadvantage of these systems is that the artificial turf itself needs to be removed in a next processing step. Another disadvantage of these systems is that the infill material also requires further processing.

### Object of the invention

One object of the invention is to address at least one of the above mentioned problems and provide a removal device for removing infill material from artificial turf.

Another object of the invention is to provide an improved processing device and method for removing infill material from artificial turf which removes all or substantially all infill material from the artificial turf.

### The invention

The invention provides a device for removing infill material from a strip of artificial turf, the device comprising:
- one or more guides for guiding the strip of artificial turf through the removal device,
- a first strip support and a second strip support which are spaced apart,
- a beating device for removing infill material from the strip of artificial turf, wherein the beating device is constructed to beat the strip on the side of the grass blades, such that use is made of the inertia of the infill material, wherein the beating device is positioned between the first and second strip support,
characterized in that the strip of artificial turf is not supported at the beating device, wherein the beating device is constructed to move the strip of artificial turf back and forth transverse to the direction of the strip.

With this embodiment, substantially all the infill material may be removed from the strip.

The invention further relates to a method of using a removal device for removing infill material from a strip of artificial turf, the method comprising:
- providing the removal device comprising:
   - one or more guides for guiding the strip of artificial turf through the removal device,
   - a first strip support and a second strip support which are spaced apart,
   - a beating device for removing the infill material from the strip of artificial turf, wherein the beating device is constructed to beat the strip on the side of the grass blades, such that use is made of the inertia of the infill material, wherein the beating device is positioned between the first and second strip support,
   characterized in that the strip of artificial turf is not supported at the beating device, wherein the beating device is constructed to move the strip of artificial turf back and forth transverse to the direction of the strip, and
- guiding the strip of artificial turf through the removal device,
- beating the strip of artificial turf on the side of the grass blades, such that use is made of the inertia of the infill material.

In an embodiment, the removal device comprises one or more strip supports for supporting a part of the strip of artificial turf in a substantially inverted orientation, i.e. in an upside down orientation or a substantially upside down orientation, wherein the beating device is constructed to engage the strip of artificial turf where it is substantially inverted. Because the sand is more firm, gravity may then assist in the removal.

A 'fluttering' movement of the strip facilitates the removal of sand particles.

A standing wave is created between the first and second strip support which goes up and down and which shakes the sand particles from the strip.

The beating device beats the strip on the side of the grass blades. This causes a movement of the strip in the other direction, while the sand particles tend to stay in the same place and become separated from the artificial turf. The inertia of the sand particles thus assists in the removal operation.

In an embodiment, the invention is mobile and the removal device is constructed to be moved forward over the ground surface, the removal device comprising a lifting device constructed for lifting the strip of artificial turf from the ground surface as the removal device is moved forward.

The filler material in artificial turf often comprises two components, i.e. rubber granules and sand particles. The two kinds of particles are located in two different layers in the artificial turf. The different layers continue to exist during the lifespan of the artificial turf. Thus, when the artificial turf is to be removed after a substantial number of years, the different layers still exist.

The sand layer is provided as a bottom layer which lies directly on top of the base of the artificial turf. On top of the sand particle layer, a top layer of rubber granules is provided. The sand particles and rubber granules mix somewhat, but to a much larger extent the two kinds of particles stay separated in separated layers and form a separation line.

It was found that these two kinds of particles show a different mechanical behavior. It was found that the rubber granules remain rather loosely in the artificial turf. This corresponds to the purpose of the rubber granules, which is to provide a cushioned surface for the players and the ball.

The sand particles show a somewhat different behavior. The sand particles stick together somewhat and stick more or less to the artificial grass. The sand forms a rather firm or cohesive layer which does not come loose very easily.

### List of figures

The invention is explained in more detail in the text which follows, with reference to the figures, which show a number of embodiments, which are given purely by way of nonlimiting examples. The invention is only limited by the claims.
Figure 1 shows a side view of an embodiment of the invention.
Figure 2 shows a top view of the embodiment of figure 1.
Figure 3 shows a detailed side view of a first infill removing device in action.
Figure 4 shows a detailed side view of a sand particle removing device in action.
Figure 5 shows a side view of a section of typical artificial turf.

### Detailed description of the figures

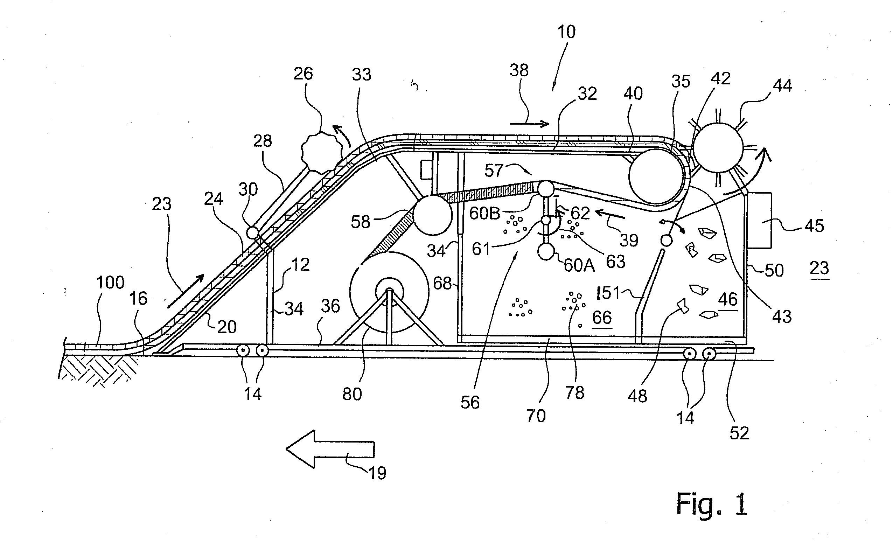

Turning to Figures 1-4, a removal device 10 according to the invention is shown. The removal device 10 comprises a frame 12 which is supported by wheels 14. Tracks or a skid device may also support the removal device 10 instead of the wheels 14. It is also possible that the removal device 10 is suspended above the ground by mounting the removal device to a bulldozer 17, tractor 17 or truck 17, or the like.

The removal device 10 is constructed to move or be moved over a ground surface 16 on which artificial turf 100 lies. The removal device 10 may be self-powered or driven by the bulldozer or truck 17. Here, the removal device 10 is driven by a bulldozer and the removal device 10 is mounted to the front end of the bulldozer 17. However, it is also possible to mount the removal device to a rear end of the bulldozer or other vehicle.

The removal device 10 has a width 11 which is adapted to a practical width of a strip 24 of artificial turf. The width 11 may be 3-4 meters, but may also be another width

The frame 12 supports the different parts of the removal device 10. A guiding device 20 is provided at a front side 22 of the removal device 10 for guiding a strip 24 of artificial turf upwards when the removal device is moved forwards. The guiding device 20 is a plate but may also be a set of rollers or a conveyor belt.

It is also conceivable that the guiding device 20 is a large roller which lifts the strip 24 from the underground via a rolling action.

The guiding device 20 extends at an inclined orientation. An auxiliary roller 26 is provided which is connected to the frame 12 via a pivotable arm 28 and a hinge 30. The auxiliary roller 26 is driven and drives the strip 24 along the guiding surface 20.

The guiding device 20 goes over in a horizontal guiding device 32 via a curved plate 33. The horizontal guiding device 32 is a plate which extends substantially horizontally. The horizontal guiding device 32 may also be a conveyor belt or comprise rollers. The strip 24 is now at an altitude above the ground surface.

The guiding device 20 and the horizontal guiding device 32 are supported by one or more posts 34 which are part of the frame 12 and extend vertically from a lower horizontal plate or beam 36 of the frame 12.

A further guiding roller 35 is provided near an end 40 of the horizontal guide 32. The guiding roller 35 is not driven by a drive, but may be driven by a drive if necessary.

The guiding roller 35 is constructed to guide the strip 24 from a horizontal orientation in one direction 38 to a substantially horizontal orientation in an opposite direction 39. The guiding roller 35 may have a diameter 130 between 50 and 150mm, preferably about 120mm.

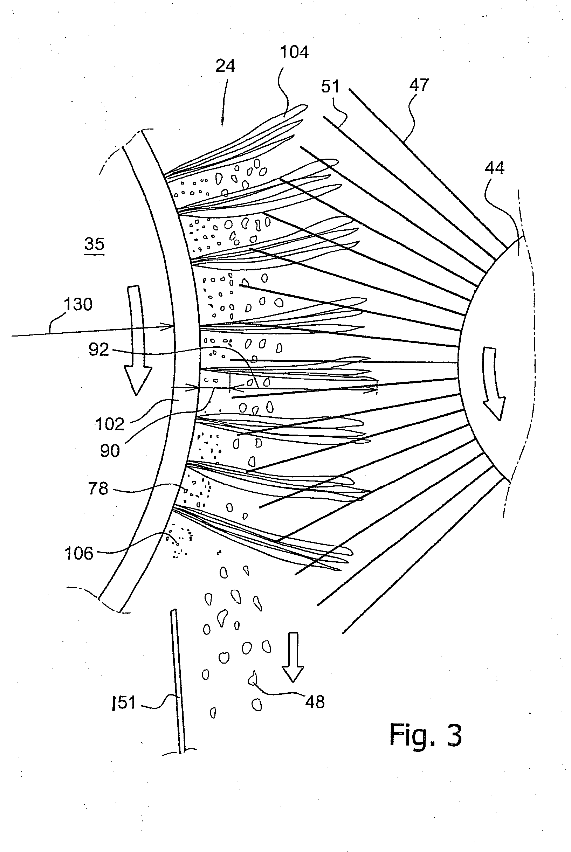

The strip 24 is bent by the guiding roller 35, such that a bending 42 region is formed. The strip undergoes a transition from the first direction 38 to the next direction 39 in the bending region 42. In the bending region 42, the blades of the grass diverge from one another, as is shown in more detail in figure 3.

The guiding roller 35 also creates a vertical region 43, which in this embodiment is a part of the bending region 42. This is shown in more detail in figure 3.

A first infill removing device in the form of a rotary brush 44 is provided which is constructed to engage the strip 24 in the bending region 42. The rotary brush 44 and its action is shown in more detail in figure 3. The rotary brush 44 is mounted to the frame via a vertical post 34. The rotary brush 44 is driven by a drive 45, which may be electrical. The rotary brush 44 comprises hairs 47. The rotary brush comprises adjusters which allow adjustment of the position of the rotary brush 44. According to requirements, the rotary brush 44 can be positioned closer to a base 102 (or backing layer) of the strip 24 or further away from the base of the strip 24. This allows fine tuning of the removal device, such that in use only rubber granules 48 are removed and the sand layer stays substantially inside the artificial turf. More specifically, the ends 51 of the hairs 47 penetrate the artificial turf to a certain depth 92, and remain at a certain distance 90 from the base 102. This distance may be 1-4 mm.

The rotary brush may rotate at a speed of 20-100 rotations per minute.

It is also possible that the strip 42 is engaged by the brush in a straight vertical region, i.e. a vertical region which is not bent.

A first collection container 46 is provided directly underneath the bending region 42, for collecting rubber granules 48 which drop from the strip 24 of artificial turf. The collection container 46 is defined by a first wall 50, a second wall 151 and a bottom surface 52.

It is also possible that a conveyor belt or other discharge device 121 is provided on which the rubber granules drop. A combination of a collection container 46 and a conveyor belt or other discharging device is also possible. The collection container 46 collects the rubber granules 48 and transfers the rubber granules to a discharge device 121. The discharge device may also be a vacuum-based device, which sucks the rubber granules via a stream of air.

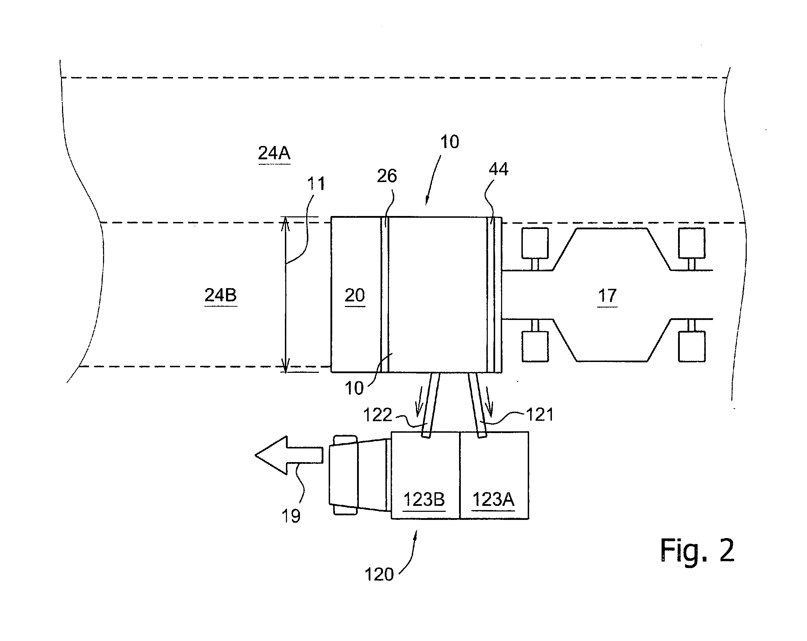

A separate vehicle 120 may be provided for collecting the rubber granules, as is shown in figure 2.

The guide roller 35 is constructed to change the orientation of the strip 24 from an upright orientation to a substantially inverted orientation, i.e. an upside down orientation. A further guide roller 58 is provided. The section of the strip 24 which extends between the roller 35 and the roller 58 is inverted or substantially inverted.

A second infill removal device in the form of a sand particles removal device 56 is provided in the inverted region 57. The sand particles removing device 56 is positioned downstream from the first infill removing device 44. The sand particles removing device 56 is a beating device and comprises a shaft 61 mounted on an axis of rotation. Two beating bars 60A, 60b are mounted at a distance 62 from the rotation axis 61. The beating bars 60A, 60B are elongate bars which span the width 11 of the removal device. The radius of the beating bars may be between 50-120mm, typically 80mm.

The beating bars 60A, 60B are constructed to beat against the strip 24 on the side of the grass blades during the rotation in direction 63. In use, the strip is pushed away by the beating bars, and the inertia causes the sand particles to stay in the same place. The strip and the sand particles become separated.

A sand particles collection container 66 is provided under the sand particles removal device 56.

The collection container 66 is defined by wall 51, wall 68 and bottom surface 70.

The collection container 66 may comprise a discharge device 122 for discharging the sand particles away from the removal device 10.

A collecting reel 80 is provided near the guiding roller 58. The collecting reel 80 is constructed to spool (or wind) the strip 24 onto the collecting reel 80. The collecting reel 80 may be driven by a drive. An unloading device may be provided for removing the reel 80 when it is full and providing a new, empty roller to the removal device 10.

The removal device is constructed to spool the strip 24 onto the reel 80 with the grass blades facing inwards.

It will be clear to the skilled person that the movements are relative movements. It is also possible to hold the removal device 10 stationary and to feed the strip 24 to the removal device 10. In this situation, the strip 24 will need to be removed from the underground in a separate processing action and to be transported to the removal device 10. The removal device 10 then is a processing device rather than a removal device, because the removing of the artificial turf itself is performed in a separate step.

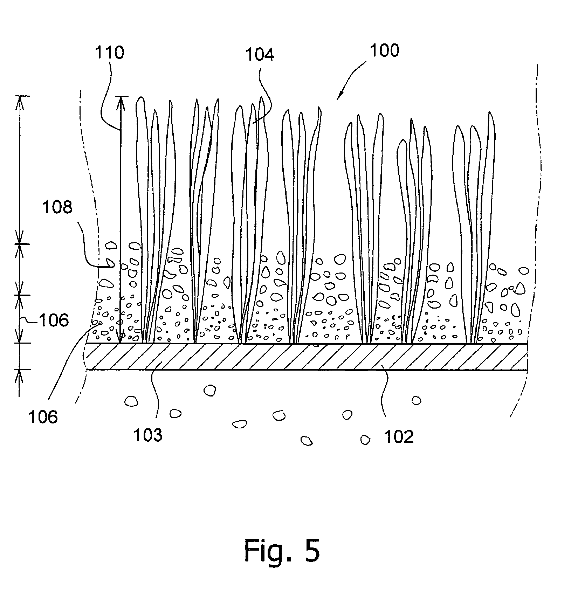

Figure 5 shows a typical configuration of artificial turf 100 on a ground surface. The artificial turf 100 comprises a base 102 and blades 104 of grass which are connected at one end 103 to the base 102. The base 102 may have a thickness of 1-4 mm. The grass blades 104 extend upwards or substantially upwards. The height 110 of the grass blades 104 is typically between 20 mm (for a hockey field) and 65 mm (for a football field).

A first layer 106 of sand particles 78 (or sand particles) is provided. The first layer 106 lies directly on top of the base 102. The sand layer is typically between 10 and 25 mm. A second layer 108 of rubber granules 48 is provided on top of the first layer 106. The second layer is typically between 10 and 30mm. Some mixing occurs between the rubber granules and the sand, but this mixing layer is very limited in thickness. The sand layer 106 is quite compact and stiff, whereas the rubber layer 108 is quite loose. This is due to the different size, shape, weight, flexibility and friction coefficient of sand particles and rubber granules. Other characteristics may also play a role in the layered nature of the infill material.

The sand particles are generally between 0.5 mm and 1 mm, whereas the rubber granules are generally between 0 and 5 mm. Sand particles are generally rather cubicle shaped, whereas rubber granules are rather elongate. Further, sand particles weigh approximately 2600 kg/m3, whereas rubber granules weigh approximately 1500kg/m3 (when measured as solid rubber). These differences result in a different packing of the material in the artificial turf, i.e. a relative looseness of the rubber granules and a relative firmness of the sand particles. The differences ensure that the layer of rubber granules remain on substantially top of the layer of sand particles, even after years of use of the artificial turf 100.

### Operation

With reference to figures 1-4, prior to the removal operation, the artificial turf has been cut into strips 24 which are of a suitable width to be processed by the removal device. It is conceivable that cutters are provided at the front end of the removal device 10 for cutting the strips during the removal operation itself. The artificial turf will often be artificial grass.

The strip 24 is guided upwards by the guiding device 20 while the removal device 10 is moved forwards over the ground surface in a direction 19.

The strip 24 then moves over the horizontal guide 32 to the end 40 thereof. The strip 24 is subsequently bent in a curve downwards by the guiding roller 35. The rotating brush 44 acts on the strip 24 of artificial turf in the bending region 42.

The rubber granules 48 are substantially removed by the rotating brush 44. The sand particles 49 stay substantially in the strip 24 of artificial grass. In practice, some sand particles 49 may be removed together with the rubber granules, but this remains limited.

The rotating brush 44 comprises adjusters with which the distance of the brush to the strip 24 can be adjusted. In this, way, fine tuning of the rotating rush is possible. If too much sand particles are removed together with the rotating brush, the distance between the brush and the strip is increased. If a substantial portion of the rubber granules 48 stay behind in the strip 24 of artificial turf, the distance is decreased.

The staying behind of the sand particles is partly due to the deeper location of the sand particles, and partly due to the cohesion between the sand particles and between the sand particles and the grass blades. Sand particles have the tendency to become more compact over the course of time, contrary to rubber granules. The sand particles stick together and to the artificial turf due to the compact configuration of the sand particles

The distance may depend on the type of artificial turf, on the kind of filling and of the amount of filling of respectively rubber granules and sand particles.

The speed of rotation of the rotating brush 44 can also be adjusted during operation in order to fine tune the operation.

The rubber granules 48 drop in the collection container 46.

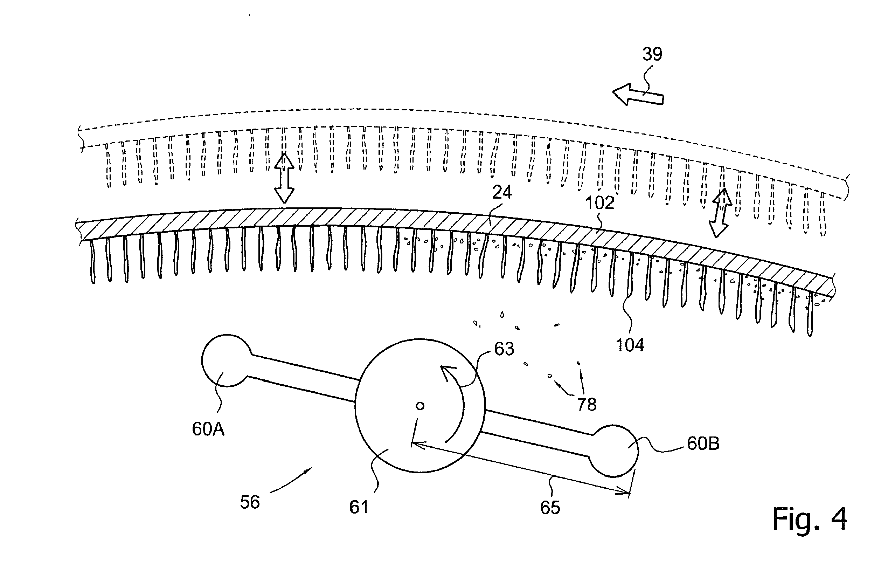

Next, the strip 24 moves in direction 39 to the sand particles removal device 56. The strip 24 is now in an inverted orientation or a substantially inverted orientation. The strip is held under some tension by the guiding roller 35 on the one hand and a next guiding roller 58 on the other hand. The guiding roller 58 is driven by a drive 59. The part of the strip between the rollers 35 and 58 has some freedom of movement and is allowed to flutter. This is shown in more detail in figure 4, wherein in continuous lines a first position of the strip 24 is shown and in dashed lines a second position of the strip 24 is shown. The strip 24 moves fast between these extreme positions by the action of the beating bars 60 and thus sheds the sand particles 78.

The fluttering movement allows the sand particles 78 to loosen from the artificial turf 24 and fall down in the collection container 66. Gravitation assists in the loosening of the sand particles. Inertia of the sand particles may also play an important role.

The strip 24 is subsequently conveyed over the roller 58 to the reel 80. The strip is spooled on the reel 80. When the reel 80 is full, it is removed and a new, empty reel 80 is inserted.

Turning to figure 2, a truck 120 or other vehicle may move alongside the removal device 10 in a same direction 19 as the removal device 10. A first discharge device 121 in the form of a conveyor belt may be provided for discharging the rubber granules from the removal device to a first container 123A on the truck 120. A second discharge device 122 may be provided for discharging the sand particles to a second container 123B on the truck 120. When the containers 123A, 123B are full, the truck 120 may be replaced by an empty truck 120.

The end result of the process is that three separate components are created, i.e. a strip of cleaned artificial turf, a quantity of sand and a quantity of rubber granules. The three components each have commercial value and may be sold to other parties directly from the pitch.

It will be obvious to a person skilled in the art that the details and the arrangement of the parts may be varied over considerable range without departing from the scope of the invention. The invention is limited only by the claims.

## Claims

1. Removal device (10) for removing infill material from a strip of artificial turf, the removal device comprising:
• one or more guides for guiding the strip of artificial turf through the removal device,
• a first strip support (35) and a second strip support (58) which are spaced apart,
• a beating device (56) for removing the infill material from the strip of artificial turf, wherein the beating device is constructed to beat the strip on the side of the grass blades, such that use is made of the inertia of the infill material, wherein the beating device is positioned between the first and second strip support,
**characterized in that** the strip of artificial turf is not supported at the beating device, wherein the beating device is constructed to move the strip of artificial turf back and forth transverse to the direction of the strip.

2. Removal device according to claim 1, being configured to create a standing wave between the first and second strip support which goes up and down and which shakes sand particles from the strip.

3. Removal device according to claim 1 or 2, wherein the strip supports are configured for supporting a part of the strip of artificial turf in a substantially inverted orientation, i.e. in an upside down orientation or a substantially upside down orientation, wherein the beating device is constructed to engage the strip of artificial turf where it is substantially inverted.

4. Removal device of any of the preceding claims, being constructed to be moved forward over a ground surface on which artificial turf lies, the removal device comprising a lifting device constructed for lifting the strip of artificial turf from the ground surface as the removal device is moved forward.

5. Removal device according to any of the preceding claims, comprising:
- a frame (12) which is supported by wheels (14), tracks or a skid device,
- a guiding device (20) provided at a front side (22) of the removal device (10) for guiding a strip (24) of artificial turf upwards when the removal device is moved forwards, the guiding device extending at an inclined orientation and guiding the strip (24) to an altitude above the ground surface,
- a horizontal guide (32),
- a guide roller (35) provided at an end (40) of the horizontal guide (32), wherein the guide roller (35) is constructed to change the orientation of the strip (24) from an upright orientation to a substantially inverted orientation, i.e. an upside down orientation,
- a further guide roller (59), wherein the region (57) of the strip (24) which extends between the guide roller (35) and the further guide roller (59) is inverted or substantially inverted,
- a collecting reel (80) being provided near the further guide roller (59), the collecting reel being configured for spooling the strip (24) onto the collecting reel,
wherein the beating device is constructed to beat the strip on the side of the grass blades in the inverted region (57) between the guide roller (35) and the further guide roller (59).

6. Method of using a removal device (10) for removing infill material from a strip of artificial turf, the method comprising:
• providing the removal device (10) comprising:
- one or more guides for guiding the strip of artificial turf through the removal device,
- a first strip support (35) and a second strip support (58) which are spaced apart,
- a beating device (56) for removing the infill material from the strip of artificial turf, wherein the beating device is constructed to beat the strip on the side of the grass blades, such that use is made of the inertia of the infill material, wherein the beating device is positioned between the first and second strip support,
**characterized in that** the strip of artificial turf is not supported at the beating device, wherein the beating device is constructed to move the strip of artificial turf back and forth transverse to the direction of the strip, and
• guiding the strip of artificial turf through the removal device,
• beating the strip of artificial turf on the side of the grass blades, such that use is made of the inertia of the infill material.

7. Method of claim 6, wherein a standing wave is created between the first and second strip support which goes up and down and which shakes sand particles from the strip.

## Patentansprüche

1. Entnahmevorrichtung (10) zum Entfernen von Einstreumaterial aus einem Streifen aus Kunstrasen, wobei die Entnahmevorrichtung umfasst:
- eine oder mehrere Führungen zum Führen des Streifens aus Kunstrasen durch die Entnahmevorrichtung,
- einen ersten Streifenträger (35) und einen zweiten Streifenträger (58), die voneinander beabstandet sind,
- eine Schlagvorrichtung (56) zum Entfernen von Einstreumaterial aus dem Streifen Kunstrasen, wobei die Schlagvorrichtung ausgebildet ist, den Streifen auf der Seite der Grashalme zu schlagen, so dass die Massenträgheit des Einstreumaterials ausgenutzt wird, wobei die Schlagvorrichtung zwischen dem ersten Streifenträger und dem zweiten Streifenträger angeordnet ist,
**dadurch gekennzeichnet, dass**
der Streifen aus Kunstrasen nicht an der Schlagvorrichtung abgestützt wird, wobei die Schlagvorrichtung eingerichtet ist, den Streifen Kunstrasen vor und zurück, quer zur Richtung des Streifens verlaufend, zu bewegen.

2. Entnahmevorrichtung nach Anspruch 1, die eingerichtet ist, eine stehende Welle zwischen dem ersten und zweiten Streifenträger zu erzeugen, die sich nach oben und unten bewegt und die Sandteilchen aus dem Streifen rausschüttelt.

3. Entnahmevorrichtung nach Anspruch 1 oder 2, wobei die Streifenträger eingerichtet sind, einen Teil des Streifens aus Kunstrasen in einer im Wesentlichen umgekehrten Ausrichtung, das heißt in einer auf dem Kopf stehenden Ausrichtung oder in einer im Wesentlichen auf dem Kopf stehenden Ausrichtung, zu tragen, wobei die Schlagvorrichtung eingerichtet ist, in den Streifen aus Kunstrasen einzugreifen, wo er im Wesentlichen umgedreht ist.

4. Entnahmevorrichtung nach einem der vorhergehenden Ansprüche, die eingerichtet ist, über eine Bodenoberfläche, auf der Kunstrasen liegt, vorwärts bewegt zu werden, wobei die Entnahmevorrichtung eine Hebevorrichtung umfasst, die eingerichtet ist, den Streifen aus Kunstrasen von der Bodenoberfläche anzuheben, wenn die Entnahmevorrichtung vorwärts bewegt wird.

5. Entnahmevorrichtung nach einem der vorhergehenden Ansprüche, umfassend:
- einen Rahmen (12), der von Rädern (14), einem Schienenstrang oder einer Rutschvorrichtung getragen wird,
- eine Führungsvorrichtung (20), die an einer Vorderseite (22) der Entnahmevorrichtung (10) bereitgestellt wird, zum nach oben Führen eines Streifens (24) aus Kunstrasen, wenn die Entnahmevorrichtung nach vorne bewegt wird, wobei sich die Führungsvorrichtung in eine Schräglage erstreckt und den Streifen (24) auf einer Höhe über der Bodenoberfläche führt,
- eine horizontale Führung (32),
- eine Führungswalze (35), die an einem Ende (40) der horizontalen Führung (32) bereitgestellt wird, wobei die Führungswalze (35) ausgebildet ist, die Ausrichtung des Streifens (24) von einer aufrechten Ausrichtung in eine im Wesentlichen umgekehrte Ausrichtung, das heißt in eine auf dem Kopf stehende Ausrichtung, zu ändern,
- eine weitere Führungswalze (59), wobei der Bereich (57) des Streifens (24), der sich zwischen der Führungswalze (35) und der weiteren Führungswalze erstreckt (59), umgekehrt oder im Wesentlichen umgekehrt ist,
- eine Sammelrolle (80), die in der Nähe der weiteren Führungswalze (59) bereitgestellt wird, wobei die Sammelrolle eingerichtet ist, den Streifen (24) auf die Sammelrolle aufzuwickeln,
wobei die Schlagvorrichtung eingerichtet ist, den Streifen auf der Seite der Grashalme in dem umgekehrten Bereich (57), zwischen der Führungsrolle (35) und der weitere Führungsrolle (59) zu schlagen.

6. Verfahren zum Gebrauch einer Entnahmevorrichtung (10) zum Entfernen von Einstreumaterial aus einem Streifen aus Kunstrasen, wobei das Verfahren umfasst:
- ein Bereitstellen der Entnahmevorrichtung (10), umfassend:
- eine oder mehrere Führungen zum Führen des Streifens aus Kunstrasen durch die Entnahmevorrichtung,
- einen ersten Streifenträger (35) und einen zweiten Streifenträger (58), die voneinander beabstandet sind,
- eine Schlagvorrichtung (56) zum Entfernen von Einstreumaterial aus dem Streifen Kunstrasen, wobei die Schlagvorrichtung ausgebildet ist, den Streifen auf der Seite der Grashalme zu schlagen, so dass die Massenträgheit des Einstreumaterials ausgenutzt wird, wobei die Schlagvorrichtung zwischen dem ersten Streifenträger und dem zweiten Streifenträger angeordnet ist,
**dadurch gekennzeichnet, dass**
der Streifen aus Kunstrasen nicht an der Schlagvorrichtung abgestützt wird, wobei die Schlagvorrichtung ausgebildet ist, den Streifen Kunstrasen vor und zurück, quer zur Richtung des Streifens verlaufend, zu bewegen, und
- Führen des Streifens aus Kunstrasen durch die Entnahmevorrichtung,
- Schlagen des Streifens aus Kunstrasen auf der Seite der Grashalme, so dass die Massenträgheit des Einstreumaterials ausgenutzt wird.

7. Verfahren nach Anspruch 6, wobei eine stehende Welle zwischen dem ersten und zweiten Streifenträger erzeugt wird, die sich nach oben und unten bewegt und die Sandteilchen aus dem Streifen rausschüttelt.

## Revendications

1. Dispositif de retrait (10) pour retirer un matériau de remplissage d'une bande de gazon artificiel, le dispositif de retrait comprenant :
un ou plusieurs guides pour guider la bande de gazon artificiel à travers le dispositif de retrait,
un premier support de bande (35) et un second support de bande (58) qui sont espacés,
un dispositif de battage (56) pour retirer le matériau de remplissage de la bande de gazon artificiel, dans lequel le dispositif de battage est construit pour battre la bande sur le côté des brins d'herbe, de sorte que l'on utilise l'inertie du matériau de remplissage, dans lequel le dispositif de battage est positionné entre les premier et second supports de bande,
**caractérisé en ce que** la bande de gazon artificiel n'est pas supportée au niveau du dispositif de battage, dans lequel le dispositif de battage est construit pour déplacer la bande de gazon artificiel selon un mouvement de va-et-vient de manière transversale par rapport au sens de la bande.

2. Dispositif de retrait selon la revendication 1, étant configuré pour créer une onde stationnaire entre les premier et second supports de bande qui monte et descend et qui secoue les particules de sable de la bande.

3. Dispositif de retrait selon la revendication 1 ou 2, dans lequel les supports de bande sont configurés pour supporter une partie de la bande de gazon artificiel dans une orientation sensiblement inversée, c'est-à-dire une orientation retournée ou une orientation sensiblement retournée, dans lequel le dispositif de battage est construit pour mettre en prise la bande de gazon artificiel à l'endroit où elle est sensiblement inversée.

4. Dispositif de retrait selon l'une quelconque des revendications précédentes, étant construit pour être déplacé vers l'avant sur une surface de sol sur laquelle se trouve le gazon artificiel, le dispositif de retrait comprenant un dispositif de levage construit pour lever la bande de gazon artificiel de la surface de sol lorsque le dispositif de retrait est déplacé vers l'avant.

5. Dispositif de retrait selon l'une quelconque des revendications précédentes, comprenant :
un bâti (12) qui est supporté par des roues (14), des chenilles ou un dispositif de patin,
un dispositif de guidage (20) prévu au niveau d'un côté avant (22) du dispositif de retrait (10) pour guider une bande (24) de gazon artificiel vers le haut lorsque le dispositif de retrait est déplacé vers l'avant, le dispositif de guidage s'étendant dans une orientation inclinée et guidant la bande (24) à une hauteur au-dessus de la surface de sol,
un guide horizontal (32),
un rouleau de guidage (35) prévu au niveau d'une extrémité (40) du guide horizontal (32),
dans lequel le rouleau de guidage (35) est construit pour modifier l'orientation de la bande (24) à partir d'une orientation droite jusqu'à une orientation sensiblement inversée, c'est-à-dire une orientation retournée,
un rouleau de guidage supplémentaire (59), dans lequel la région (57) de la bande (24) qui s'étend entre le rouleau de guidage (35) et le rouleau de guidage supplémentaire (59) est inversée ou sensiblement inversée,
une bobine de collecte (80) qui est prévue à proximité du rouleau de guidage supplémentaire (59), la bobine de collecte étant configurée pour enrouler la bande (24) sur la bobine de collecte,
dans lequel le dispositif de battage est construit pour battre la bande sur le côté des brins d'herbe dans la région inversée (57) entre le rouleau de guidage (35) et le rouleau de guidage supplémentaire (59).

6. Procédé pour utiliser un dispositif de retrait (10) pour retirer le matériau de remplissage d'une bande de gazon artificiel, le procédé comprenant les étapes consistant à :
prévoir le dispositif de retrait (10) comprenant :
un ou plusieurs guides pour guider la bande de gazon artificiel à travers le dispositif de retrait,
un premier support de bande (35) et un second support de bande (58) qui sont espacés,
un dispositif de battage (56) pour retirer le matériau de remplissage de la bande de gazon artificiel, dans lequel le dispositif de battage est construit pour battre la bande sur le côté des brins d'herbe, de sorte que l'on utilise l'inertie du matériau de remplissage, dans lequel le dispositif de battage est positionné entre les premier et second supports de bande,
**caractérisé en ce que** la bande de gazon artificiel n'est pas supportée au niveau du dispositif de battage, dans lequel le dispositif de battage est construit pour déplacer la bande de gazon artificiel selon un mouvement de va-et-vient de manière transversale par rapport au sens de la bande, et
guider la bande de gazon artificiel à travers le dispositif de retrait,
battre la bande de gazon artificiel sur le côté des brins d'herbe, de sorte que l'on utilise l'inertie du matériau de remplissage.

7. Procédé selon la revendication 6, dans lequel une onde stationnaire est créée entre les premier et second supports de bande qui monte et descend et qui secoue les particules de sable de la bande.
